# EUROPEAN PATENT APPLICATION

(11) **EP 4 763 708 A1**
(43) Date of publication of application: **24.06.2026**
(21) Application number: 25217596.3
(22) Date of filing: 21.11.2025
(51) Int. Cl.: B64D 27/40

(54) **GAS TURBINE ENGINE**

(30) Priority: 20.12.2024 GB 202418825
(71) Applicant: Rolls-Royce plc, London N1 9FX (GB)
(72) Inventor: Stretton, Richard, Derby, DE24 8BJ (GB); Ahmed, Perveiz, Derby, DE24 8BJ (GB)
(74) Representative: Rolls-Royce plc

(57) **Abstract**

A gas turbine engine (10) including a rear attachment (400) comprising: a plurality of angularly distributed rotational pylon connections (221, 222, 223) for coupling to a wing pylon (200) and defining a pylon connection angular extent; a plurality of angularly distributed engine connections (121, 122, 123) for coupling to a rear mount structure (117) of the gas turbine engine 10 and defining an engine connection angular extent; and a link structure extending between the pylon connections (221, 222, 223) and the engine connections (121, 122, 123); wherein the link structure, pylon connections (221, 222, 223) and engine connections (121, 122, 123) are configured to transfer a roll torque from the rear mount structure (117) to the wing pylon (200); and wherein a ratio of the engine connection angular extent to the pylon connection angular extent is at least 1.75.

## Description

### FIELD

This disclosure relates to a gas turbine engine comprising front and rear attachments for mounting the gas turbine engine to a wing pylon.

### BACKGROUND

A conventional gas turbine engine may comprise a front attachment for mounting a core of the gas turbine engine to a wing pylon. A torque load imparted by the core of the gas turbine engine may then be transferred from the front attachment along the wing pylon, for reaction at a wing to which the wing pylon is mechanically coupled (i.e., a wing of an aircraft to which the gas turbine engine is attached). Use of a front attachment for this purpose may enable a relatively short downstream external exhaust system to be employed within the gas turbine engine. However, to react the torque load in this way, the front attachment and/or the wing pylon should be sized proportionately. The size of the front attachment and/or the wing pylon may impact on the aerolines within a bypass duct of the gas turbine engine, which may influence (e.g., increase) a pressure drop within the bypass duct of the gas turbine engine and/or influence (e.g., increase) a drag associated with the gas turbine engine (which may be referred to as powerplant drag).

### SUMMARY

In an aspect, there is provided a gas turbine engine comprising front and rear attachments for mounting the gas turbine engine to a wing pylon, wherein the rear attachment is partially enclosed within a pylon fairing that bifurcates a bypass duct and is configured to extend from the wing pylon to a core fairing of the gas turbine engine. The rear attachment comprises: a plurality of rotational pylon connections for coupling to the wing pylon, including two pylon connections within a radial extent of the pylon fairing and angularly distributed relative to a centreline axis of the gas turbine engine to define a pylon connection angular extent; a plurality of engine connections for coupling to a rear mount structure of the gas turbine engine, wherein the engine connections are angularly distributed relative to the centreline axis to define an engine connection angular extent; and a link structure extending between the pylon connections and the engine connections. The link structure, pylon connections and engine connections are configured to transfer a roll torque about the centreline axis from the rear mount structure to the wing pylon. A ratio of the engine connection angular extent to the pylon connection angular extent may be at least 1.75.

The ratio of the engine connection angular extent to the pylon connection angular extent may be at least 2, for example at least 2.5, at least 3, or at least 4. The ratio of the engine connection angular extent to the pylon connection angular extent may be 1.75-6, for example 2-6, 2.5-6, 3-6 or 4-6. It may be 1.75-4, for example 2-4, 2.5-4 or 3-4.

In an embodiment, the pylon connections are coupled to a pylon bracket for coupling to the wing pylon.

In an embodiment, the pylon bracket extends through the pylon fairing to project through the core fairing, and wherein the plurality of rotational pylon connections comprises an inner pylon connection coupled to the pylon bracket within the radial extent of the core fairing.

In an embodiment, the link structure comprises: two outer link arms coupling the two pylon connections within the radial extent of the pylon fairing to respective engine connections; and an inner link arm coupling the inner pylon connection to a respective engine connection. In an embodiment, the inner link arm is configured to inhibit rotation of the rear mount structure about a virtual pivot defined by the two outer link arms.

In an embodiment, each link arm couples a respective pylon connection to a different engine connection.

In an embodiment, the two outer link arms extend laterally outwardly relative to a top-dead-centre axis extending through the centreline axis of the engine and the rear attachment, and are each inclined relative to the top-dead-centre axis by an angle of at least 30 degrees.

In an embodiment, the link structure comprises two crossing links that cross one another between respective pylon and engine connections, and are coupled by a rotational connection where they cross.

In an embodiment, the rear attachment defines a profile in a reference plane normal to the centreline axis of the engine. The profile of the rear attachment may have a variable angular extent about the centreline axis of the engine, varying over a radial extent of the rear attachment. The link structure may define a neck in the profile of the rear attachment having a minimum angular extent along the radial extent of the rear attachment. In an embodiment, a ratio of the engine connection angular extent to the angular extent of the neck is at least 4. It may be that the neck is defined where the two crossing links cross one another. In an embodiment, one of the crossing links is an articulated link comprising a link arm and an articulation member coupled by a rotational connection between the respective pylon and engine connections. The link arm may cross the other crossing link.

In an embodiment, the articulation link is relatively shorter than the link arm. The rotational connection between the link arm and articulation member may be a spherical connection and/or the pylon connection associated with the articulated link may be a spherical connection. The engine connection associated with the articulated link may be a spherical connection.

In an embodiment, the link structure comprises a rigid link body directly coupled to two pylon connections or two engine connections.

In an embodiment, the rigid link body is coupled to one of the pylon connections or to one of the engine connections via an articulation member.

In an embodiment, the rigid link body extends laterally away from a top-dead-centre axis within the core fairing, for coupling to the rear mount structure via an one of the engine connections.

In an embodiment, the link structure comprises an articulated link, the articulated link comprising a link member and an articulation member coupled by a rotational connection between the respective pylon and engine connections.

In an embodiment, the link member is a link arm and the articulation member is relatively shorter than the link arm; and/or the articulation member extends to the respective pylon connection; or the articulation member extends to the respective engine connection.

In an embodiment, the rear attachment defines a profile in a reference plane normal to the centreline axis of the engine. It may be that the profile of the rear attachment has a variable angular extent about the centreline axis of the engine, varying over a radial extent of the rear attachment. The link structure may define a neck in the profile of the rear attachment having a minimum angular extent along the radial extent of the rear attachment. A ratio of the engine connection angular extent to the angular extent of the neck may be at least 2.

The ratio of the engine connection angular extent to the angular extent of the neck may be at least 4 or at least 5. For example, the ratio of the engine connection angular extent to the angular extent of the neck may be 2-20, for example 2-15, 4-15 or 5-15.

In an embodiment, the gas turbine engine may comprise: an engine core comprising a turbine, a compressor, and a core shaft connecting the turbine to the compressor; a fan located upstream of the engine core, the fan comprising a plurality of fan blades; and a gearbox that receives an input from the core shaft and outputs drive to the fan so as to drive the fan at a lower rotational speed than the core shaft.

In an embodiment, the gearbox may have a gear ratio in the range of from 3.0 to 4.2, or in the range of from 3.2 to 4.2, or in the range of from 3.2 to 4.0.

In an embodiment, the turbine may be a first turbine, the compressor may be a first compressor, and the core shaft may be a first core shaft; the engine core further may comprise a second turbine, a second compressor, and a second core shaft connecting the second turbine to the second compressor; and the second turbine, second compressor, and second core shaft may be arranged to rotate at a higher rotational speed than the first core shaft.

In an aspect, there is provided an assembly comprising the gas turbine engine of the previous aspect, the wing pylon, and the pylon fairing wherein the rear attachment is partially enclosed within the pylon fairing.

As noted elsewhere herein, the present disclosure may relate to a gas turbine engine. Such a gas turbine engine may comprise an engine core comprising a turbine, a combustor, a compressor, and a core shaft connecting the turbine to the compressor. Such a gas turbine engine may comprise a fan (having fan blades) located upstream of the engine core.

Arrangements of the present disclosure may be particularly, although not exclusively, beneficial for fans that are driven via a gearbox. Accordingly, the gas turbine engine may comprise a gearbox that receives an input from the core shaft and outputs drive to the fan so as to drive the fan at a lower rotational speed than the core shaft. The input to the gearbox may be directly from the core shaft, or indirectly from the core shaft, for example via a spur shaft and/or gear. The core shaft may rigidly connect the turbine and the compressor, such that the turbine and compressor rotate at the same speed (with the fan rotating at a lower speed). The gas turbine engine as described and/or claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.

The gearbox may be arranged to be driven by the core shaft that is configured to rotate (for example in use) at the lowest rotational speed (for example the first core shaft in the example above). For example, the gearbox may be arranged to be driven only by the core shaft that is configured to rotate (for example in use) at the lowest rotational speed (for example only by the first core shaft, and not the second core shaft, in the example above). Alternatively, the gearbox may be arranged to be driven by any one or more shafts, for example the first and/or second shafts in the example above.

The gearbox may be a reduction gearbox (in that the output to the fan is a lower rotational rate than the input from the core shaft). Any type of gearbox may be used. For example, the gearbox may be a "planetary" or "star" gearbox, as described in more detail elsewhere herein. The gearbox may have any desired reduction ratio (defined as the rotational speed of the input shaft divided by the rotational speed of the output shaft), for example greater than 2.5, for example in the range of from 3.0 to 4.2, or 3.2 to 4.2, or 3.2 to 4.0, or 3.2 to 3.8, for example on the order of or at least 3.0, 3.1, 3.2, 3.3, 3.4, 3.5, 3.6, 3.7, 3.8, 3.9, 4.0, 4.1 or 4.2. The gear ratio may be, for example, between any two of the values in the previous sentence. Purely by way of example, the gearbox may be a "star" gearbox having a ratio in the range of from 3.1 or 3.2 to 3.8. In some arrangements, the gear ratio may be outside these ranges.

In any gas turbine engine as described and/or claimed herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of stages, for example multiple stages. Each stage may comprise a row of rotor blades and a row of stator vanes, which may be variable stator vanes (in that their angle of incidence may be variable). The row of rotor blades and the row of stator vanes may be axially offset from each other.

The or each turbine (for example the first turbine and second turbine as described above) may comprise any number of stages, for example multiple stages. Each stage may comprise a row of rotor blades and a row of stator vanes. The respective rows of rotor blades and stator vanes may be axially offset from each other. In each stage, the row of rotor blades may be arranged downstream from the respective row of stator vanes.

Each fan blade may be defined as having a radial span extending from a root (or hub) at a radially inner gas-washed location, or 0% span position, to a tip at a 100% span position. The ratio of the radius of the fan blade at the hub to the radius of the fan blade at the tip may be less than (or on the order of) any of: 0.4, 0.39, 0.38, 0.37, 0.36, 0.35, 0.34, 0.33, 0.32, 0.31, 0.3, 0.29, 0.28, 0.27, 0.26, or 0.25. The ratio of the radius of the fan blade at the hub to the radius of the fan blade at the tip may be in an inclusive range bounded by any two of the values in the previous sentence (i.e. the values may form upper or lower bounds), for example in the range of from 0.28 to 0.32. These ratios may commonly be referred to as the hub-to-tip ratio. The radius at the hub and the radius at the tip may both be measured at the leading edge (or axially forwardmost) part of the blade. The hub-to-tip ratio refers, of course, to the gas-washed portion of the fan blade, i.e. the portion radially outside any platform.

The radius of the fan may be measured between the engine centreline and the tip of a fan blade at its leading edge. The fan diameter (which may simply be twice the radius of the fan) may be greater than (or on the order of) any of: 200 cm, 210 cm, 220 cm, 230 cm, 240 cm, 250 cm (around 100 inches), 260 cm, 270 cm (around 105 inches), 280 cm (around 110 inches), 290 cm (around 115 inches), 300 cm (around 120 inches), 310 cm, 320 cm (around 125 inches), 330 cm (around 130 inches), 340 cm (around 135 inches), 350 cm, 360 cm (around 140 inches), 370 cm (around 145 inches), 380 cm (around 150 inches), 390 cm (around 155 inches), 400 cm, 410 cm (around 160 inches) or 420 cm (around 165 inches). The fan diameter may be in an inclusive range bounded by any two of the values in the previous sentence (i.e. the values may form upper or lower bounds), for example in the range of from 200 cm to 210 cm, or 210 cm to 240 cm, or 250 cm to 280 cm, or 320 cm to 380 cm.

The rotational speed of the fan may vary in use. Generally, the rotational speed is lower for fans with a higher diameter. Purely by way of non-limitative example, the rotational speed of the fan at cruise conditions may be less than 2600 rpm, for example less than 2500 rpm, or less than 2300 rpm. Purely by way of further non-limitative example, the rotational speed of the fan at cruise conditions for an engine having a fan diameter in the range of from 200 cm to 300 cm (for example 210 cm to 290 cm, or 240 cm to 280 cm, or 250 cm to 270 cm) may be in the range of from 1700 rpm to 2600 rpm, for example in the range of from 1800 rpm to 2300 rpm, for example in the range of from 1900 rpm to 2100 rpm. Purely by way of further non-limitative example, the rotational speed of the fan at cruise conditions for an engine having a fan diameter in the range of from 330 cm to 380 cm may be in the range of from 1200 rpm to 2000 rpm, for example in the range of from 1300 rpm to 1800 rpm, for example in the range of from 1400 rpm to 1800 rpm.

In use of the gas turbine engine, the fan (with associated fan blades) rotates about a rotational axis. This rotation results in the tip of the fan blade moving with a velocity Uₜᵢₚ. The work done by the fan blades on the flow results in an enthalpy rise dH of the flow. A fan tip loading may be defined as dH/Uₜᵢₚ², where dH is the enthalpy rise (for example the 1-D average enthalpy rise) across the fan and Uₜᵢₚ is the (translational) velocity of the fan tip, for example at the leading edge of the tip (which may be defined as fan tip radius at leading edge multiplied by angular speed). The fan tip loading at cruise conditions may be greater than (or on the order of) any of: 0.28, 0.29, 0.30, 0.31, 0.32, 0.33, 0.34, 0.35, 0.36, 0.37, 0.38, 0.39 or 0.4 (all values being dimensionless ). The fan tip loading may be in an inclusive range bounded by any two of the values in the previous sentence (i.e. the values may form upper or lower bounds), for example in the range of from 0.28 to 0.31, or 0.29 to 0.3.

Gas turbine engines in accordance with the present disclosure may have any desired bypass ratio (BPR), where the bypass ratio is defined as the ratio of the mass flow rate of the flow through the bypass duct to the mass flow rate of the flow through the core. In some arrangements the bypass ratio at cruise conditions may be greater than (or on the order of) any of the following: 10, 10.5, 11, 11.5, 12, 12.5, 13, 13.5, 14, 14.5, 15, 15.5, 16, 16.5, 17, 17.5, 18, 18.5, 19, 19.5 or 20. The bypass ratio at cruise conditions may be in an inclusive range bounded by any two of the values in the previous sentence (i.e. the values may form upper or lower bounds), for example in the range of from 10 to 16, or 12 to 16, 13 to 15, or 10 to 12, or 12 to 14, or 13 to 14. The bypass duct may be substantially annular. The bypass duct may be radially outside the core engine. The radially outer surface of the bypass duct may be defined by a nacelle and/or a fan case.

The overall pressure ratio (OPR) of a gas turbine engine as described and/or claimed herein may be defined as the ratio of the stagnation pressure upstream of the fan to the stagnation pressure at the exit of the highest pressure compressor (before entry into the combustor). By way of non-limitative example, the overall pressure ratio of a gas turbine engine as described and/or claimed herein at cruise conditions may be greater than (or on the order of) any of the following: 35, 40, 45, 50, 55, 60, 65, 70, 75. The overall pressure ratio may be in an inclusive range bounded by any two of the values in the previous sentence (i.e. the values may form upper or lower bounds), for example in the range of from 50 to 70.

Specific thrust of an engine may be defined as the net thrust of the engine divided by the total mass flow through the engine. At cruise conditions, the specific thrust of an engine described and/or claimed herein may be less than (or on the order of) any of the following: 110 Nkg⁻¹s, 105 Nkg⁻¹s, 100 Nkg⁻¹s, 95 Nkg⁻¹s, 90 Nkg⁻¹s, 85 Nkg⁻¹s or 80 Nkg⁻¹s. The specific thrust may be in an inclusive range bounded by any two of the values in the previous sentence (i.e. the values may form upper or lower bounds), for example in the range of from 80 Nkg⁻¹s to 100 Nkg⁻¹s, or 85 Nkg⁻¹s to 100 Nkg⁻¹s, 85 Nkg⁻¹s to 95 Nkg⁻¹s. Such engines may be particularly efficient in comparison with conventional gas turbine engines.

A gas turbine engine as described and/or claimed herein may have any desired maximum thrust. Purely by way of non-limitative example, a gas turbine as described and/or claimed herein may be capable of producing a maximum thrust of at least (or on the order of) any of the following: 130kN, 135kN, 140kN, 145kN, 150kN, 155kN, 160kN, 170kN, 180kN, 190kN, 200kN, 250kN, 300kN, 350kN, 400kN, 450kN, 500kN, or 550kN. The maximum thrust may be in an inclusive range bounded by any two of the values in the previous sentence (i.e. the values may form upper or lower bounds). Purely by way of example, a gas turbine as described and/or claimed herein may be capable of producing a maximum thrust in the range of from 130kN to 145kN, or 155kN to 170kN, or 330kN to 420 kN, or 350kN to 400kN. The thrust referred to above may be the maximum net thrust at standard atmospheric conditions at sea level plus 15 degrees C (ambient pressure 101.3kPa, temperature 30 degrees C), with the engine static.

In use, the temperature of the flow at the entry to the high pressure turbine may be particularly high. This temperature, which may be referred to as turbine entry temperature (TET), may be measured at the exit to the combustor, for example immediately upstream of the first turbine vane, which itself may be referred to as a nozzle guide vane. At cruise conditions, the TET may be at least (or on the order of) any of the following: 1400K, 1450K, 1500K, 1520K, 1530K, 1540K, 1550K, 1600K or 1650K. The TET at cruise conditions may be in an inclusive range bounded by any two of the values in the previous sentence (i.e. the values may form upper or lower bounds), for example 1530K to 1600K. The maximum TET in use of the engine may be, for example, at least (or on the order of) any of the following: 1700K, 1750K, 1800K, 1850K, 1900K, 1950K or 2000K. The maximum TET may be in an inclusive range bounded by any two of the values in the previous sentence (i.e. the values may form upper or lower bounds), for example in the range of from 1700K to 1800K, or 1800K to 1950K, or 1900K to 2000K. The maximum TET may occur, for example, at a high thrust condition, for example at a maximum take-off (MTO) condition.

A fan blade and/or aerofoil portion of a fan blade described and/or claimed herein may be manufactured from any suitable material or combination of materials. For example at least a part of the fan blade and/or aerofoil may be manufactured at least in part from a composite, for example a metal matrix composite and/or an organic matrix composite, such as carbon fibre. By way of further example at least a part of the fan blade and/or aerofoil may be manufactured at least in part from a metal, such as a titanium based metal or an aluminium based material (such as an aluminium-lithium alloy) or a steel based material. The fan blade may comprise at least two regions manufactured using different materials. For example, the fan blade may have a protective leading edge, which may be manufactured using a material that is better able to resist impact (for example from birds, ice or other material) than the rest of the blade. Such a leading edge may, for example, be manufactured using titanium or a titanium-based alloy. Thus, purely by way of example, the fan blade may have a carbon-fibre or aluminium based body (such as an aluminium lithium alloy) with a titanium leading edge.

A fan as described and/or claimed herein may comprise a central portion, from which the fan blades may extend, for example in a radial direction. The fan blades may be attached to the central portion in any desired manner. For example, each fan blade may comprise a fixture which may engage a corresponding slot in the hub (or disc). Purely by way of example, such a fixture may be in the form of a dovetail that may slot into and/or engage a corresponding slot in the hub/disc in order to fix the fan blade to the hub/disc. By way of further example, the fan blades may be formed integrally with a central portion. Such an arrangement may be referred to as a bladed disc or a bladed ring. Any suitable method may be used to manufacture such a bladed disc or bladed ring. For example, at least a part of the fan blades may be machined from a block and/or at least part of the fan blades may be attached to the hub/disc by welding, such as linear friction welding.

The gas turbine engines described and/or claimed herein may or may not be provided with a variable area nozzle (VAN). Such a variable area nozzle may allow the exit area of the bypass duct to be varied in use. The general principles of the present disclosure may apply to engines with or without a VAN.

The fan of a gas turbine as described and/or claimed herein may have any desired number of fan blades, for example 14, 16, 18, 20, 22, 24 or 26 fan blades. As used herein, cruise conditions have the conventional meaning and would be readily understood by the skilled person. Thus, for a given gas turbine engine for an aircraft, the skilled person would immediately recognise cruise conditions to mean the operating point of the engine at mid-cruise of a given mission (which may be referred to in the industry as the "economic mission") of an aircraft to which the gas turbine engine is designed to be attached. In this regard, mid-cruise is the point in an aircraft flight cycle at which 50% of the total fuel that is burned between top of climb and start of descent has been burned (which may be approximated by the midpoint - in terms of time and/or distance - between top of climb and start of descent). Cruise conditions thus define an operating point of the gas turbine engine that provides a thrust that would ensure steady state operation (i.e. maintaining a constant altitude and constant Mach Number) at mid-cruise of an aircraft to which it is designed to be attached, taking into account the number of engines provided to that aircraft. For example where an engine is designed to be attached to an aircraft that has two engines of the same type, at cruise conditions the engine provides half of the total thrust that would be required for steady state operation of that aircraft at mid-cruise.

In other words, for a given gas turbine engine for an aircraft, cruise conditions are defined as the operating point of the engine that provides a specified thrust (required to provide - in combination with any other engines on the aircraft - steady state operation of the aircraft to which it is designed to be attached at a given mid-cruise Mach Number) at the mid-cruise atmospheric conditions (defined by the International Standard Atmosphere according to ISO 2533 at the mid-cruise altitude). For any given gas turbine engine for an aircraft, the mid-cruise thrust, atmospheric conditions and Mach Number are known, and thus the operating point of the engine at cruise conditions is clearly defined.

Purely by way of example, the forward speed at the cruise condition may be any point in the range of from Mach 0.7 to 0.9, for example 0.75 to 0.85, for example 0.76 to 0.84, for example 0.77 to 0.83, for example 0.78 to 0.82, for example 0.79 to 0.81, for example on the order of Mach 0.8, on the order of Mach 0.85 or in the range of from 0.8 to 0.85. Any single speed within these ranges may be part of the cruise condition. For some aircraft, the cruise conditions may be outside these ranges, for example below Mach 0.7 or above Mach 0.9.

Purely by way of example, the cruise conditions may correspond to standard atmospheric conditions (according to the International Standard Atmosphere, ISA) at an altitude that is in the range of from 10000m to 15000m, for example in the range of from 10000m to 12000m, for example in the range of from 10400m to 11600m (around 38000 ft), for example in the range of from 10500m to 11500m, for example in the range of from 10600m to 11400m, for example in the range of from 10700m (around 35000 ft) to 11300m, for example in the range of from 10800m to 11200m, for example in the range of from 10900m to 11100m, for example on the order of 11000m. The cruise conditions may correspond to standard atmospheric conditions at any given altitude in these ranges.

Purely by way of example, the cruise conditions may correspond to a forward Mach number of 0.8 and standard atmospheric conditions (according to the International Standard Atmosphere) at an altitude of 35000ft (10668m). At such cruise conditions, the engine may provide a known required net thrust level. The known required net thrust level is, of course, dependent on the engine and its intended application and may be, for example, a value in the range of from 20kN to 40kN.

Purely by way of further example, the cruise conditions may correspond to a forward Mach number of 0.85 and standard atmospheric conditions (according to the International Standard Atmosphere) at an altitude of 38000ft (11582m). At such cruise conditions, the engine may provide a known required net thrust level. The known required net thrust level is, of course, dependent on the engine and its intended application and may be, for example, a value in the range of from 35kN to 65kN.

In use, a gas turbine engine described and/or claimed herein may operate at the cruise conditions defined elsewhere herein. Such cruise conditions may be determined by the cruise conditions (for example the mid-cruise conditions) of an aircraft to which at least one (for example 2 or 4) gas turbine engine may be mounted in order to provide propulsive thrust.

According to an aspect, there is provided an aircraft comprising a gas turbine engine as described and/or claimed herein. The aircraft according to this aspect is the aircraft for which the gas turbine engine has been designed to be attached. Accordingly, the cruise conditions according to this aspect correspond to the mid-cruise of the aircraft, as defined elsewhere herein.

According to an aspect, there is provided a method of operating a gas turbine engine as described and/or claimed herein. The operation may be at the cruise conditions as defined elsewhere herein (for example in terms of the thrust, atmospheric conditions and Mach Number).

According to an aspect, there is provided a method of operating an aircraft comprising a gas turbine engine as described and/or claimed herein. The operation according to this aspect may include (or may be) operation at the mid-cruise of the aircraft, as defined elsewhere herein.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

### BRIEF DESCRIPTION OF THE DRAWINGS

Embodiments will now be described by way of example only with reference to the accompanying drawings, which are purely schematic and not to scale, and in which:
FIG. 1A is a sectional side view of a gas turbine engine;
FIG. 1B is a close up sectional side view of an upstream portion of a geared gas turbine engine;
FIG. 1C is a partially cut-away view of a gearbox for a gas turbine engine;
FIG. 2 shows a partial sectional view of a first example rear attachment within the gas turbine engine of FIG. 1A;
FIG. 3 shows a rear sectional view of a second example rear attachment within the gas turbine engine of FIG. 1A;
FIG. 4 is a sectional view through section B-B as indicated on FIG. 3;
FIG. 5 is a sectional view through section C-C as indicated on FIG. 3;
FIG. 6 shows a rear sectional view of a third example rear attachment within the gas turbine engine of FIG. 1A;
FIG. 7 shows a rear sectional view of a fourth example rear attachment within the gas turbine engine of FIG. 1A; and
FIG. 8 shows a rear sectional view of a fifth example rear attachment within the gas turbine engine of FIG. 1A.

### DETAILED DESCRIPTION

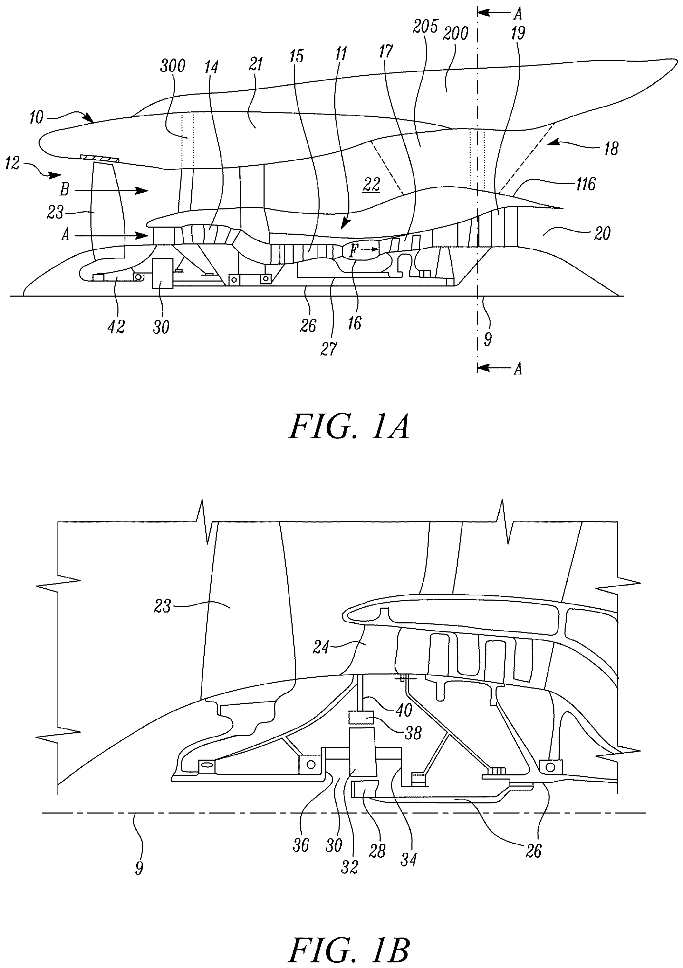

FIG. 1A illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high pressure compressor 15, combustion equipment 16, a high pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a first (low pressure) core shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel F and the mixture is combusted. The combustion equipment 16 may be referred to as the combustor 16, with the terms "combustion equipment 16" and "combustor 16" used interchangeably herein. The resultant hot combustion products then expand through, and thereby drive, the high pressure and low pressure turbines 17, 19 before being exhausted through the core exhaust nozzle 20 to provide some propulsive thrust. The high pressure turbine 17 drives the high pressure compressor 15 by a suitable interconnecting second core (high pressure) shaft 27. The fan 23 generally acts to impart increased pressure to the bypass airflow B flowing through the bypass duct 22, such that the bypass airflow B is exhausted through the bypass exhaust nozzle 18 to generally provide the majority of the propulsive thrust. The epicyclic gearbox 30 is a reduction gearbox.

An exemplary arrangement for a geared fan gas turbine engine 10 is shown in FIG. 1B. The low pressure turbine 19 (see FIG. 1A) drives the low pressure shaft 26, which is coupled to a sun wheel, or sun gear, 28 of the epicyclic gearbox 30. The low pressure shaft 26 may be referred to as an input shaft for the epicyclic gearbox 30. Radially outward of the sun gear 28 and intermeshing therewith is a plurality of planet gears 32 that are coupled together by a planet carrier 34. The planet carrier 34 constrains the planet gears 32 to precess around the sun gear 28 in synchronicity whilst enabling each planet gear 32 to rotate about its own axis. The planet carrier 34 is coupled via linkages 36 to the fan 23 through an output fan shaft 42 in order to drive the fan 23 in rotation about the engine axis 9. Radially outward of the planet gears 32 and intermeshing therewith is an annulus or ring gear 38 that is coupled, via linkages 40, to a stationary supporting structure 24.

Note that the terms "low pressure turbine" and "low pressure compressor" as used herein may be taken to mean the lowest pressure turbine stages and lowest pressure compressor stages (i.e. not including the fan 23) respectively and/or the turbine and compressor stages that are connected together by the interconnecting shaft (26) with the lowest rotational speed in the engine (i.e. not including the output fan shaft 42 that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

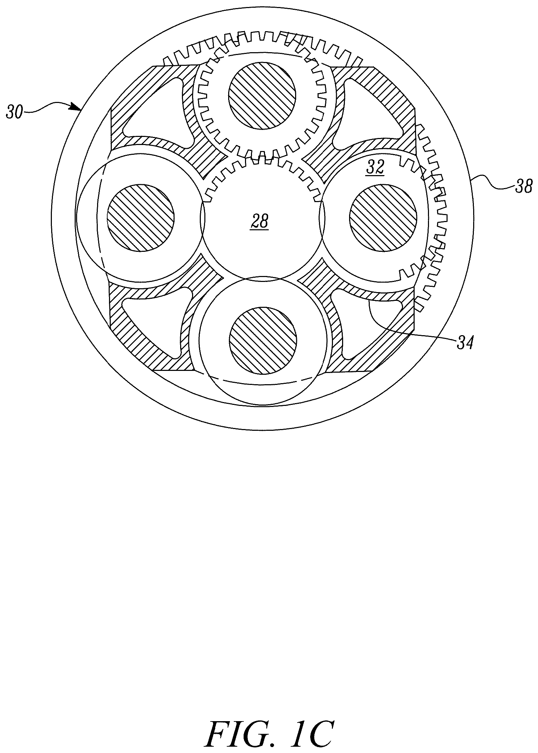

The epicyclic gearbox 30 is shown by way of example in greater detail in FIG. 1C. Each of the sun gear 28, planet gears 32 and ring gear 38 comprise teeth about their periphery to intermesh with the other gears. However, for clarity only exemplary portions of the teeth are illustrated in FIG. 1C. There are four planet gears 32 illustrated, although it will be apparent to the skilled reader that more or fewer planet gears 32 may be provided within the scope of the claimed invention. Practical applications of a planetary epicyclic gearbox 30 generally comprise at least three planet gears 32, for example five planet gears 32.

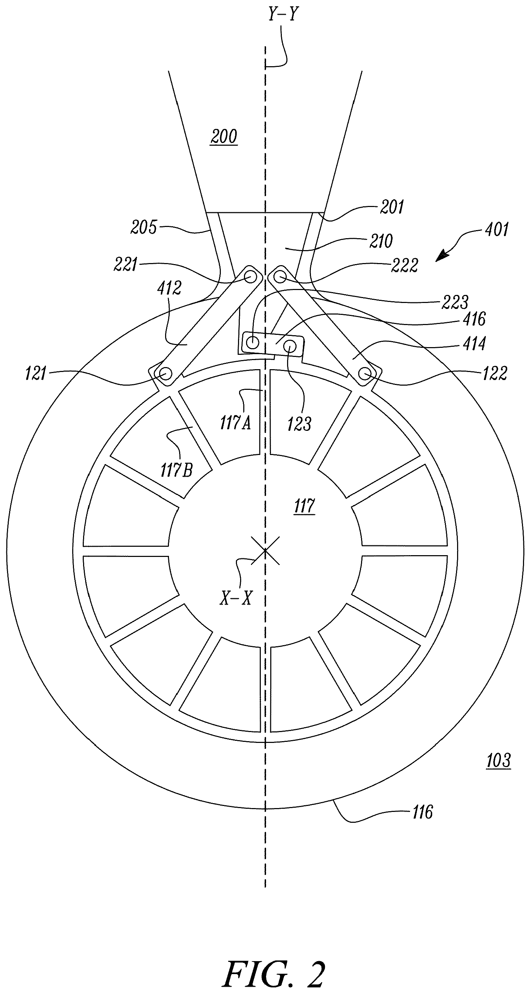

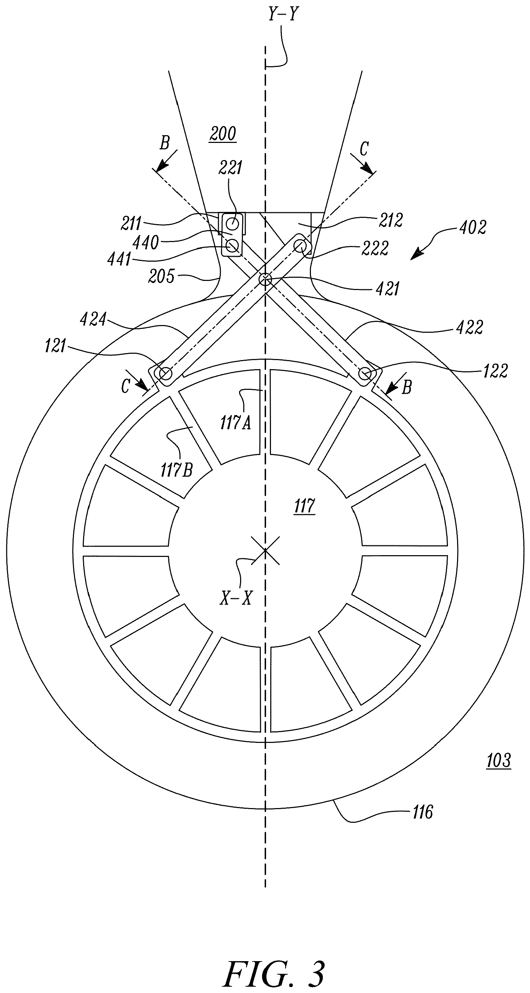

The epicyclic gearbox 30 illustrated by way of example in Figures 2 and 3 is of the planetary type, in that the planet carrier 34 is coupled to the output fan shaft 42 via linkages 36, with the ring gear 38 fixed. However, any other suitable type of epicyclic gearbox 30 may be used. By way of further example, the epicyclic gearbox 30 may be a star arrangement, in which the planet carrier 34 is held fixed, with the ring (or annulus) gear 38 allowed to rotate. In such an arrangement the fan 23 is driven by the ring gear 38. By way of further alternative example, the gearbox 30 may be a differential gearbox in which the ring gear 38 and the planet carrier 34 are both allowed to rotate.

It will be appreciated that the arrangement shown in FIG. 1B and FIG. 1C is by way of example only, and various alternatives are within the scope of the present disclosure. Purely by way of example, any suitable arrangement may be used for locating the gearbox 30 in the engine 10 and/or for connecting the gearbox 30 to the engine 10. By way of further example, the connections (such as the linkages 36, 40 in the FIG. 1B example) between the gearbox 30 and other parts of the engine 10 (such as the input shaft 26, the output fan shaft 42 and the stationary supporting structure 24) may have any desired degree of stiffness or flexibility. By way of further example, any suitable arrangement of the bearings between rotating and stationary parts of the engine (for example between the input and output shafts from the gearbox and the fixed structures, such as the gearbox casing) may be used, and the disclosure is not limited to the exemplary arrangement of FIG. 1B. For example, where the gearbox 30 has a star arrangement (described above), the skilled person would readily understand that the arrangement of output and support linkages and bearing locations would typically be different to that shown by way of example in FIG. 1B.

Accordingly, the present disclosure extends to a gas turbine engine having any arrangement of gearbox styles (for example star or planetary), support structures, input and output shaft arrangement, and bearing locations.

Optionally, the gearbox may drive additional and/or alternative components (e.g. the intermediate pressure compressor and/or a booster compressor).

Other gas turbine engines to which the present disclosure may be applied may have alternative configurations. For example, such engines may have an alternative number of compressors and/or turbines and/or an alternative number of interconnecting shafts. By way of further example, the gas turbine engine shown in FIG. 1A has a split flow nozzle 18, 20 meaning that the flow through the bypass duct 22 has its own nozzle (the bypass exhaust nozzle 18) that is separate to and radially outside the core exhaust nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area.

Whilst the described example relates to a turbofan engine, the disclosure may apply, for example, to any type of gas turbine engine, such as an open rotor (in which the fan stage is not surrounded by a nacelle) or turboprop engine, for example. In some arrangements, the gas turbine engine 10 may not comprise a gearbox 30, instead being direct-drive engines.

The geometry of the gas turbine engine 10, and components thereof, is defined by a conventional axis system, comprising an axial direction (which is aligned with the principal rotational axis 9), a radial direction (in the bottom-to-top direction in FIG. 1A), and a circumferential direction (perpendicular to the page in the FIG. 1A view). The axial, radial and circumferential directions are mutually perpendicular.

The fuel F provided to the combustion equipment 16 may comprise a fossil-based hydrocarbon fuel, such as Kerosene. Thus, the fuel F may comprise molecules from one or more of the chemical families of n-alkanes, iso-alkanes, cycloalkanes, and aromatics. As there is an expectation in the aviation industry of a trend towards the use of fuels different from the traditional kerosene-based jet fuels generally used at present, additionally or alternatively, when blended with, mixed with, or replaced by an alternative fuel, the fuel F may comprise renewable hydrocarbons produced from biological or non-biological resources, otherwise known as sustainable aviation fuel (SAF). In each of the provided examples, the fuel F may comprise one or more trace elements including, for example, sulphur, nitrogen, oxygen, inorganics, and metals.

As shown by FIG. 1A, the gas turbine engine 10 is configured to be coupled to a wing of an aircraft (i.e., an aircraft wing) by a wing pylon 200 and further comprises a front attachment 300, a rear attachment 400, a pylon fairing 205 and a core fairing 116. The core fairing 116 encompasses at least a portion of the core gas turbine engine (e.g., an aft portion of the core gas turbine engine which surrounds one or more of the turbines as shown by FIG. 1A). The pylon fairing 205 radially extends from the wing pylon 200 toward the core gas turbine. More specifically, at one axial location within the gas turbine engine 10, the pylon fairing 205 extends from the wing pylon 200 to the core fairing 116. The pylon fairing 205 therefore bifurcates the bypass duct 22. The front and rear attachments 300, 400 are each configured to mount the gas turbine engine 10 to the wing pylon 200. The front attachment 300 is positioned forward of (e.g., upstream of) the rear attachment 400 with respect to the bypass and core flow directions B and A discussed above. The rear attachment 400 is partially enclosed (e.g., disposed) within the pylon fairing 205. A more detailed description of the configuration of the rear attachment 400 is now provided with reference to FIGs. 2 to 8.

FIG. 2 shows a partial sectional view of a first example rear attachment 401 disposed within the gas turbine engine 10 of FIG. 1A, through a plane corresponding to section A-A as also indicated by FIG. 1A. A top-dead-centre (TDC) axis Y-Y is shown as extending through the principal rotational axis X-X (also referred to as the centreline axis X-X) of the gas turbine engine 10 and through the first example rear attachment 401. In the example of FIG. 2, the core fairing 116 has a substantially circular cross-section and the pylon 200 and pylon fairing 205 each have substantially trapezoidal cross-sections in the view shown by FIG. 2. However, it will be appreciated that each of these features may have different cross-sectional shapes. For simplicity, the boundary of the bypass duct 22 of the gas turbine engine 10 is not shown by FIG. 2.

The first example rear attachment 401 comprises a plurality of pylon connections 221, 222, 223; a plurality of engine connections 121, 122, 123, a pylon bracket 210; and a link structure. The plurality of engine connections are angularly distributed relative to the centreline axis X-X to define an engine connection angular extent (ECAE). In a like manner, the plurality of pylon connections are angularly distributed relative to the centreline axis X-X to define a pylon connection angular extent (PCAE). Each engine connection is configured to (and, in use, functions to) couple to a rear mount structure of the gas turbine engine 10, while each pylon connection is configured to (and, in use, functions to) couple to the wing pylon 200. As shown by FIG. 2, the rear mount structure to which the engine connections are coupled (or configured to couple) may be a turbine bearing housing 117 of the core gas turbine engine. The turbine bearing housing 117 may also be referred to as tail bearing housing. The turbine bearing housing 117 is configured to house one or more bearings configured to support a rotor of one of the turbines. Yet further, the turbine bearing housing 117 defines a plurality of stator vanes 117A, 117B which form part of a stator of the turbine. In the specific example of FIG. 2, the turbine bearing housing 117 defines a total of twelve equispaced stator vanes, but it will be appreciated that the number of stator vanes defined by the turbine bearing housing 117 may vary.

The pylon connections 221, 222, 223 are rotational connections (e.g., pin connections or spherical connections). Each pylon connection 221, 222 is coupled to the pylon bracket 210 to thereby couple the rear attachment 401 to the wing pylon 200. In this particular example, the pylon bracket 210 also extends through the pylon fairing 205 to project into the core fairing 116, as shown by FIG. 2.

Each engine connection may be located within a flange of the rear mount structure of the gas turbine engine 10 (e.g., the turbine bearing housing 117 as in the example of FIG. 2) or in an engine bracket coupled to the rear mount structure. The engine connections 121, 122, 123 may also be rotational connections (e.g., pin connections or spherical connections).

In the first example rear attachment 401, the link structure comprises a left outer link arm 412, a right outer link arm 414 and an inner link arm 416. The plurality of pylon connections includes a left outer pylon connection 221, a right outer pylon connection 222 and an inner pylon connection 223. The outer pylon connections 221, 222 are disposed relatively outward of the inner pylon connection 223 along a radial direction of the gas turbine engine 10. More specifically, the outer pylon connections 221, 222 are disposed within the radial extent of the pylon fairing 200, whereas the inner pylon connection 223 is disposed within a radial extend of the core fairing 116. The plurality of engine connections includes a left engine connection 121, a right engine connection 122, and a central engine connection 123. It will be appreciated that the terms "left", "right" and "central" are used herein to facilitate explanation only and relate to the view(s) shown by FIGs. 2 to 3 and 6 to 8.

Each outer link arm 412, 414 extends away (e.g., laterally outwardly) from the TDC axis Y-Y in a different direction. Namely, the left outer link arm 412 extends laterally outwardly from the TDC axis Y-Y in a generally anticlockwise direction per the view shown by FIG. 2 and with respect to the TDC axis Y-Y and the centreline axis X-X while the right outer link arm 412 extends laterally outwardly from the TDC axis Y-Y in a generally clockwise direction per the view shown by FIG. 2 and with respect to the TDC axis Y-Y and the centreline axis X-X. As a result, a midline of each outer link arm is inclined with respect to the TDC axis Y-Y. In particular, the midline of each outer link arm is inclined with respect to the TDC axis Y-Y by an internal angle of at least 30 degrees (e.g., 30 to 50 degrees). The internal angle is the acute angle relative to the TDC axis Y-Y 400 rather than the obtuse angle therebetween. In the example of FIG. 2, each outer link arm has a substantially straight form such that the midline of each outer link arm is substantially linear.

A first end portion (e.g., a top end portion) of the left outer link arm 412 is coupled to the left outer pylon connection 221 and a second end portion (e.g., a bottom end portion) of the left outer link arm 412 is coupled to the left engine connection 121. In a similar way, a first end portion (e.g., a top end portion) of the right outer link arm 414 is coupled to the right outer pylon connection 222 and a second end portion (e.g., a bottom end portion) of the right outer link arm 414 is coupled to the right engine connection 122. Further, a first end portion of the inner link arm 416 is coupled to the inner pylon connection 223 and a second end portion of the inner link arm 416 is coupled to the central engine connection 123.

The rear attachment 401 defines (e.g., has) a profile in a reference plane normal to the centreline axis X-X of the gas turbine engine 10 (e.g., a reference plane parallel to section A-A as indicated by FIG. 1A and corresponding to the plane of the page shown by FIG. 2). The profile of the rear attachment 401 has an angular extent (i.e., a rear attachment angular extent (RAAE)) about the centreline axis X-X of the gas turbine engine 10. The RAAE varies over a radial extent of the rear attachment 401 along the TDC axis Y-Y. The link structure defines a neck in the RAAE which corresponds to a minimum of the RAAE along the radial extent of the rear attachment 401. In the example of FIG. 2, the neck in the RAAE is at the radial position of the first and second pylon connections 221, 222 along the TDC axis Y-Y.

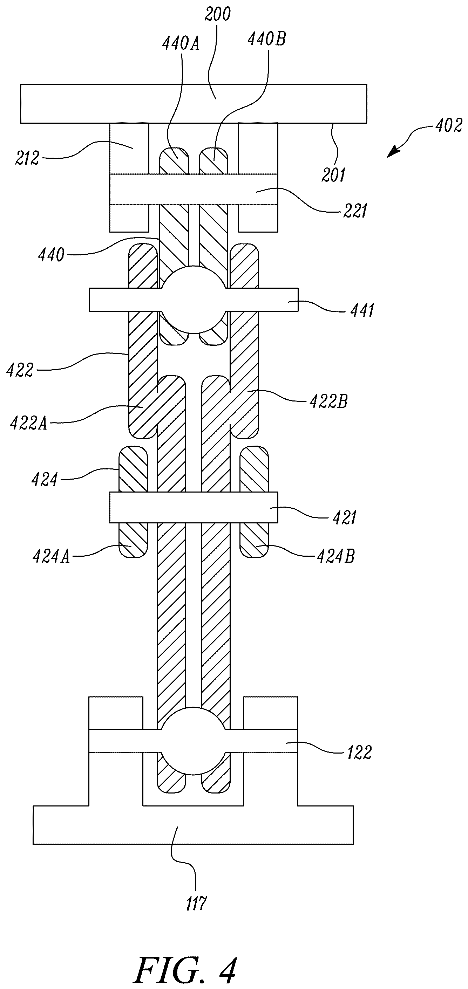

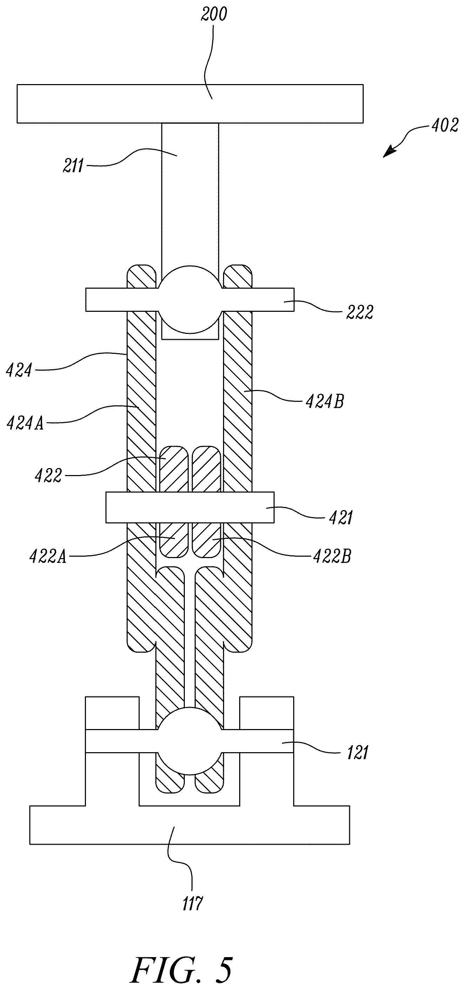

FIG. 3 shows a partial sectional view of a second example rear attachment 402 disposed within the gas turbine engine 10 of FIG. 1A, through a plane corresponding to section A-A as also indicated by FIG. 1A. FIGs. 4 and 5 are cut-through views through sections B-B and C-C, respectively, as indicated on FIG. 3.

The second example rear attachment 402 is generally similar to the first example rear attachment 401 described above with reference to FIG. 2, with like reference signs denoting common or similar features unless explicitly indicated otherwise. Namely, the second example rear attachment 402 comprises a plurality of pylon connections, a plurality of engine connections, and a link structure. The second example rear attachment 402 also comprises two pylon brackets 211, 212. However, it is envisaged that the pylon brackets 211, 212 may otherwise be combined to form a single unified pylon bracket.

The link structure of the second example rear attachment 402 comprises a first crossover link arm 422, a second crossover link arm 424 and an articulation member 440. As discussed in more detail below, the first crossover link arm 422 and the articulation member 440 are coupled to one another. Each crossover link arm 422, 424 serves as a link member in use. As a result, the first crossover link arm 422 and the articulation member 440 may be described as forming an articulated crossing link whereas the second crossover link arm 424 alone may be described as forming a non-articulated crossing link. The plurality of pylon connections includes a left pylon connection 221 and a right pylon connection 222 (and does not include a third pylon connection 223). The plurality of engine connections includes a left engine connection 121 and a right engine connection 122 (and does not include a third engine connection 123).

As described above with reference to the first example rear attachment 401, the pylon connections 221, 222 are rotational connections. In particular, and as best shown by FIG. 4, the intermediate connection 441 and the second engine connection 122 are each spherical connections while the first pylon connection 221 is a pin connection. As best shown by FIG. 5, the first engine connection 121 is a spherical connection and the second pylon connection 222 is spherical connection. Notwithstanding this, it is envisaged that the first pylon connection 221 and the second engine connection 122 may each be spherical connections while the intermediate connection 441 is a pin connection. Each pylon connection 221, 222 is coupled to a respective pylon bracket 211, 212 to enable coupling of the remainder of the rear attachment 402 to the wing pylon 200. In the example of FIG. 3, each pylon bracket 211, 212 is wholly disposed within the pylon fairing 200 and neither pylon bracket 211, 212 projects into the core fairing 116.

A first end portion (e.g., a top end portion) of the articulation member 440 is coupled to the left pylon connection 221 while a second end portion (e.g., a bottom end portion) of the first crossover link arm 422 is coupled to the right engine connection 122. A second end portion (e.g., a bottom end portion) of the articulation member 440 is coupled to a first end portion (e.g., a top end portion) of the first crossover link arm 424 at an intermediate rotational connection 441. A first end portion (e.g., a top end portion) of the second crossover link arm 424 is coupled to the right pylon connection 222 and a second end portion (e.g., a bottom end portion) of the second crossover link arm 424 is coupled to the left engine connection 121. A middle portion of the first crossover link arm 422 is coupled to a middle portion of the second crossover link arm 424 at a central rotational connection 421 such that the middle portions of the crossover link arms 422, 424 cross (e.g., overlap) one another. In other words, the articulated crossing link and the non-articulated crossing link cross one another between respective pylon 221, 222 and engine connections 121, 122 as well as being coupled by a rotational connection where they cross one another. The crossing of the crossing links aids reduction of a lateral width of the rear attachment, which is beneficial for the reasoning discussed below.

Also in the example of FIGs. 3 to 5, each crossover link arm has a substantially straight form such that the midline of each crossover link arm is substantially linear.

As the engine connections 121, 122 and the second pylon connection 222 each being spherical connections, and at least one of the first pylon connection 221 and the intermediate connection 441 being a spherical connection, this allows the engine connections 121, 122 to move relative to the pylon connections 221, 222 in a direction perpendicular to the centreline axis X-X to accommodate, for example, thermal expansion effects (e.g., of the turbine housing). After startup of the gas turbine engine 10, the core gas turbine engine (including the rear mount structure/turbine bearing housing 117) thermally expands along a direction parallel to the centreline axis X-X. It is expected that, due to this process, the engine connections 121, 122 may move relative to the pylon connections such that each crossing link is inclined with respect to the radial direction of the gas turbine engine 10, for example by approximately 0.5 degrees.

A length of the articulation member 440 is shorter (e.g., relatively shorter) than a length of the first crossover link arm 422. For example, it may be less than one third, or less than one quarter of the length of the first crossover link arm 422.

The articulation member 440 accommodates radial thermal growth of the rear mount structure relative to the link structure (due to the different temperatures and/or temperature rates of change therebetween) after startup of the gas turbine engine 10 by allowing the crossover link arms 422, 424 to perform a scissoring action with respect to each other about the central rotational connection 421. The articulation member 440 may also enable the rear attachment 402 to better accommodate build tolerance ranges of each of the components thereof.

As best shown by FIGs. 4 and 5, each of the first crossover link arm 422, the second crossover link arm 424 and the articulation member 440 include two separate corresponding (e.g., substantially identical) elements. That is, the first crossover link arm 422 includes a pair of first crossover link arm elements 422A, 422B, the second crossover link arm 424 includes a pair of second crossover link arm elements 424A, 424B and the articulation member 440 includes a pair of articulation member elements 440A, 440B. The inclusion of two corresponding elements in each of these link arms 422, 424, 440 provides a layer of redundancy (e.g., load path redundancy) in the event of a structural failure of one of the elements. As also best shown by FIGs. 4 and 5, each of the elements 422A, 422B, 424A, 424B, 440A, 440B are arranged with respect to one another to provide a symmetrical rear attachment 402 through a plane normal to the centreline axis X-X.

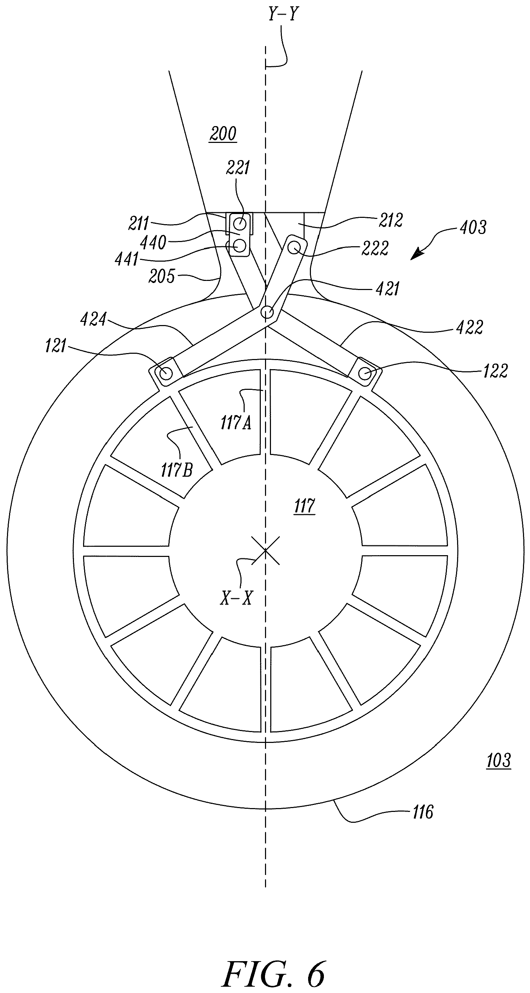

FIG. 6 shows a partial sectional view of a third example rear attachment 403 disposed within the gas turbine engine 10 of FIG. 1A through a plane corresponding to section A-A as also indicated by FIG. 1A. The third example rear attachment 403 is generally similar to the second example rear attachment 402 described above with reference to FIGs. 3 to 5, with like reference signs denoting common or similar features unless explicitly indicated otherwise.

In the link arrangement of the third example rear attachment 403, and in contrast to the second example rear attachment 402, a midline of each crossover link arm 422, 424 in the first end section thereof is inclined relative to a midline of the same crossover link arm 422, 424 in the second end section thereof (e.g., at an obtuse angle). Therefore, a combined midline of each crossover link arm is non-linear. The resulting shape of each crossover link arm 422, 424 may be described as a "boomerang" shape. The shape of crossover link arms 422, 424 in the third example rear attachment 403 promotes ease of incorporation of the rear attachment 403 within the gas turbine engine 10, for example by improving a fit between the rear attachment 403 and the surfaces where the pylon fairing 205 meets the core fairing 116 and thus allowing a narrower profile to be provided at this juncture. For example, it may permit a relatively large angular extent for the engine connections while having a relatively narrow angular extent for the pylon connections.

In the examples of FIGs. 3 to 6, the neck in the RAAE is at the radial position of the central rotational connection 421 along the TDC axis Y-Y where the two crossing links cross one another.

In the second and third example rear attachments 402, 403 described above with reference to FIGs. 3 to 6, the articulation member 440 extends to one of the pylon connections from one of the crossover link arms. However, it is envisaged that in variant examples the articulation member 440 may extend from one of the engine connections to one of the crossover link arms.

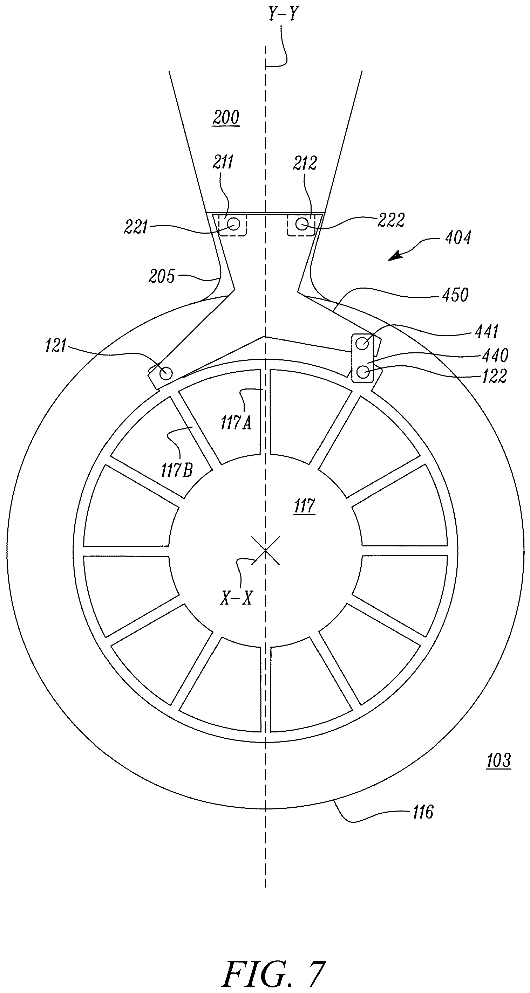

FIG. 7 shows a partial sectional view of a fourth example rear attachment 404 disposed within the gas turbine engine 10 of FIG. 1A through a plane corresponding to section A-A as also indicated by FIG. 1A. The fourth example rear attachment 404 is generally similar to the example rear attachments 401, 402, 403 described above with reference to FIGs. 3 to 6, with like reference signs denoting common or similar features unless explicitly indicated otherwise.

The link structure of the second example rear attachment 402 comprises a rigid link body 450 and an articulation member 440. The rigid link body 450 serves, in use, as a link member extending laterally away from the TDC axis Y-Y within the core fairing 116 to enable coupling of the turbine bearing housing 117 (e.g., the rear mount structure) to the wing pylon 200 via each of the engine connections 121, 122. The rigid link body 450 is integral (e.g., is a unibody) and is directly coupled to each of the pylon connections 221, 222 and the first engine connection 121. Further, the rigid link body 450 is coupled to the second engine connection 122 by the articulation member 440. In turn, the rigid link body 450 is indirectly coupled to the articulation member 440 via an intermediate rotational connection 441. In other examples, the rigid link body 450 may be directly coupled to each of the engine connections 121, 122 and to one of the pylon connections 221, 222 while being indirectly coupled to the other of the pylon connections 221, 222 by an articulation member 440 as described above. In this example, the pylon connections 221, 222 are spherical connections.

As described above with reference to FIGs. 3 to 7, the articulation member 440 accommodates radial thermal growth of the rear mount structure relative to the rigid link body 450 (due to the different temperatures and/or temperature rates of change therebetween) during operation of the gas turbine engine 10. The articulation member 440 may also enable the rear attachment 404 to better accommodate build tolerance ranges of each of the components thereof.

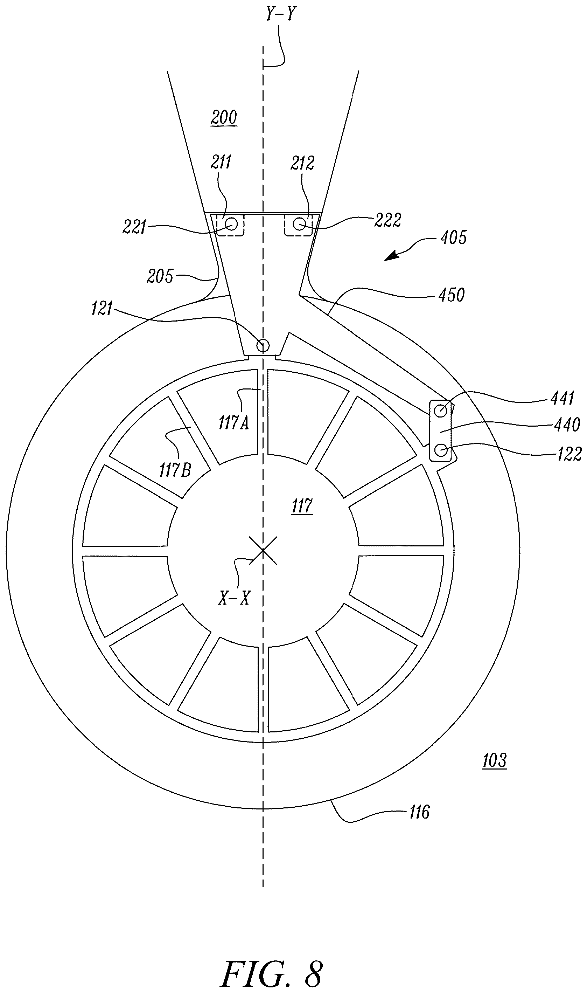

FIG. 8 shows a partial sectional view of a fifth example rear attachment 405 disposed within the gas turbine engine 10 of FIG. 1A through a plane corresponding to section A-A as also indicated by FIG. 1A. The fifth example rear attachment 405 is generally similar to the fourth example rear attachment 404 described above with reference to FIG. 7, with like reference signs denoting common or similar features unless explicitly indicated otherwise.

However, in the fifth example rear attachment 405, the engine connections are not disposed on opposing sides of the TDC axis. Instead, a left engine connection 121 (which, in this example, may also be described as a central engine connection 121) is disposed on the TDC axis, whereas the right engine connection 122 is angularly spaced from the TDC axis (to the right-hand side in FIG. 8). In this example, the rigid link body 450 extends along the TDC axis within the core fairing 116 to enable coupling of the turbine bearing housing 117 to the wing pylon 200 via the left engine connection 121, and the rigid link body 450 only extends laterally away from the TDC axis Y-Y within the core fairing 116 to enable coupling of the turbine bearing housing 117 to the wing pylon 200 via the right engine connection 122. In the example of FIGs. 7 to 8, the neck in the RAAE is defined by an external profile of the rigid link body 450. Due to the arrangement of the rigid link body 450 in this way, the fifth example rear attachment 405 may therefore be described as an offset attachment 405.

In each of the example rear attachments 401-405 described above, the link structure, pylon connections and engine connections are configured to transfer a roll torque (e.g., a roll torque load) about the centreline axis X-X from the rear mount structure (in the illustrated examples, the turbine bearing housing 117) to the wing pylon 200. To this end, each example rear attachment includes at least two angularly distributed pylon connections and at least two angularly distributed engine connections. The link structure, pylon connections and engine connections being configured to transfer a roll torque about the centreline axis X-X from the rear mount structure to the wing pylon 200 includes the link structure, pylon connections and engine connections being configured to inhibit (e.g., resist/substantially prevent) rotation of the rear mount structure about a roll axis relative to the pylon (for example rotation about a virtual pivot). By way of example, in the first example rear attachment 401, the inner link arm 416 is configured to inhibit rotation of the rear mount structure about a virtual pivot defined by the outer link arms 412, 414. By way of further example, in the second to fifth rear attachments 402-404, the articulation member 440 inhibits rotation of the rear mount structure about a virtual pivot.

Moreover, in each of the example rear attachments 401-405 described above, the link structure, pylon connections and engine connections are configured to transfer lateral (i.e. side) and vertical loads.

Further, in each of the example rear attachments 401-405, the ECAE is at least 52.5 degrees. Optionally, the ECAE in rear attachments in accordance with the examples described herein may be at least 60 degrees, at least 65 degrees, at least 70 degrees, at least 75 degrees, at least 80 degrees, at least 85 degrees, at least 90 degrees, at least 95 degrees, at least 100 degrees, at least 110 degrees, or at least 120 degrees. The ECAE in rear attachments in accordance with the examples described herein may be less than 150 degrees, less than 140 degrees, less than 130 degrees, or less than 125 degrees. For example, the ECAE in rear attachments in accordance with the examples described herein may be between 70 degrees and 100 degrees, between 75 degrees and 95 degrees, or 80 degrees and 95 degrees.

Conversely, in each of the example rear attachments 401-405, the PCAE is no more than 30 degrees. The PCAE may be at least 5 degrees, at least 10 degrees, or at least 15 degrees. In accordance with the present disclosure, a ratio of the ECAE to the PCAE is therefore at least 1.75 (e.g., 52.5 degrees to 30 degrees). Optionally, the ratio of the ECAE to the PCAE may be at least 2 (e.g., 60 degrees to 30 degrees), at least 2.5 (e.g., 75 degrees to 30 degrees), at least 3 (e.g., 90 degrees to 30 degrees), or at least 4 (e.g., 120 degrees to 30 degrees). The ratio of the ECAE to the PCAE may be no more than 10 (e.g. 120 degrees to 12 degrees), no more than 9 (e.g. 108 degrees to 12 degrees), no more than 8 (e.g. 80 degrees to 10 degrees), or no more than 7 (e.g. 70 degrees to 10 degrees).

Accordingly, rear attachments in accordance with the present disclosure are capable of reacting to lateral and vertical loads as well as roll torques while providing a relatively reduced lateral width (e.g., a narrower arrangement) compared to previously-considered rear attachments. This reduced lateral width allows a maximum width of the pylon fairing 205 to be reduced, which is associated with a lower pressure drop within the bypass duct 22 of the gas turbine engine 10, a smaller drag associated with the gas turbine engine 10 and thus higher performance. For example, a ratio of a lateral width of the ECAE and the lateral width of the neck in the RAAE may be at least 5.

In rear attachments in accordance with the present disclosure, a ratio between the ECAE and the neck in the RAAE may be at least 2, at least 4, or at least 5. By way of example, the ratio between the ECAE and the neck in the RAAE is approximately 6.9 in the example of Fig. 2 with the engine attachments at approximately 30° away from a top dead center line. However, the ratio may be approximately double that with the engine attachments moved to approximately 60° away from a top dead center line. Further, as will be appreciated the angle may be yet higher in other examples, such as the example of FIGs 3 to 6. In rear attachments in accordance with the present disclosure, the ratio between the ECAE and the neck in the RAAE is less than 18, less than 15, less than 12, or less than 10.

By reacting roll torque loads at the rear attachments, the invention reduces loads along the pylon from a front attachment, therefore lowering load ratings for associated components and permitting commensurately smaller sizing.

Rear attachments in accordance with the present disclosure are especially suitable for bridging a relatively large vertical gap from a rear mount structure of a gas turbine engine to a wing pylon, in particular a wing pylon floor 201. Such large vertical gaps may be found in high-bypass turbofan engines having geared architectures, wherein the turbine and therefore the turbine bearing housing has a relatively small diameter.

The link structure of rear attachments in accordance with the present disclosure allows to bridge such relatively large gap with a compact and light arrangement that allows to reduce the lateral width of the pylon fairing 205 and to provide lateral, vertical and torque load transfer to the pylon 200.

Rear attachments in accordance with the present disclosure are especially suitable for geared gas turbine engines with a ratio of the turbine bearing housing diameter to the fan diameter less than 0.55, 0.50, 0.45, 0.44, 0.43, 0.42, 0.41 or 0.40. In examples the ratio of the turbine bearing housing diameter to the fan diameter is greater than 0.35, 0.36, 0.37, 0.38, or 0.39. In an example of geared gas turbine engine with a rear attachment in accordance with the present disclosure the ratio of the turbine bearing housing diameter to the fan diameter is 0.40.

In geared gas turbine engines in accordance with the present disclosure a ratio of the gap between the wing pylon floor and the turbine bearing structure (as measured along the top-dead-centre axis Y-Y) to the fan diameter may be greater than 0.06, greater than 0.07, greater than 0.08, greater than 0.09, greater than 0.10. The ratio of the gap between the wing pylon floor and the turbine bearing structure to the fan diameter may be less than 0.15, less than 0.14, less than 0.13, less than 0.12, or less than 0.11.

In geared gas turbine engines with a relatively large ratio of the gap between the wing pylon floor and the turbine bearing structure to the fan diameter as in the above ranges, the rear attachments in accordance with the present disclosure provide a solution to transfer vertical, lateral, and torque loads that allows to reduce the size of the pylon and the width of the pylon fairing, and therefore the associated drag.

Various examples have been described, each of which comprise various combinations of features. It will be appreciated by those skilled in the art that, except where clearly mutually exclusive, any of the features may be employed separately or in combination with any other features and the scope of the subject-matter disclosed extends to and includes all combinations and sub-combinations of one or more features described herein.

## Claims

1. A gas turbine engine comprising front and rear attachments for mounting the gas turbine engine to a wing pylon, wherein the rear attachment is partially enclosed within a pylon fairing that bifurcates a bypass duct and is configured to extend from the wing pylon to a core fairing of the gas turbine engine, the rear attachment comprising:
a plurality of rotational pylon connections for coupling to the wing pylon, including two pylon connections within a radial extent of the pylon fairing and angularly distributed relative to a centreline axis of the gas turbine engine to define a pylon connection angular extent;
a plurality of engine connections for coupling to a rear mount structure of the gas turbine engine, wherein the engine connections are angularly distributed relative to the centreline axis to define an engine connection angular extent; and
a link structure extending between the pylon connections and the engine connections;
wherein the link structure, pylon connections and engine connections are configured to transfer a roll torque about the centreline axis from the rear mount structure to the wing pylon; and
wherein a ratio of the engine connection angular extent to the pylon connection angular extent is at least 1.75.

2. The gas turbine engine of claim 1, wherein the pylon connections are coupled to a pylon bracket for coupling to the wing pylon.

3. The gas turbine engine of claim 2, wherein the pylon bracket extends through the pylon fairing to project through the core fairing, and wherein the plurality of rotational pylon connections comprises an inner pylon connection coupled to the pylon bracket within the radial extent of the core fairing.

4. The gas turbine engine of claim 3, wherein the link structure comprises:
two outer link arms coupling the two pylon connections within the radial extent of the pylon fairing to respective engine connections;
an inner link arm coupling the inner pylon connection to a respective engine connection;
wherein the inner link arm is configured to inhibit rotation of the rear mount structure about a virtual pivot defined by the two outer link arms.

5. The gas turbine engine of claim 4, wherein the two outer link arms extend laterally outwardly relative to a top-dead-centre axis extending through the centreline axis of the engine and the rear attachment, and are each inclined relative to the top-dead-centre axis by an angle of at least 30 degrees

6. The gas turbine engine of claim 1, wherein the link structure comprises two crossing links that cross one another between respective pylon and engine connections, and are coupled by a rotational connection where they cross.

7. The gas turbine engine of claim 6,
wherein the rear attachment defines a profile in a reference plane normal to the centreline axis of the engine;
wherein the profile of the rear attachment has a variable angular extent about the centreline axis of the engine, varying over a radial extent of the rear attachment;
wherein the link structure defines a neck in the profile of the rear attachment having a minimum angular extent along the radial extent of the rear attachment;
wherein a ratio of the engine connection angular extent to the angular extent of the neck is at least 4, and
wherein the neck is defined where the two crossing links cross one another.

8. The gas turbine engine of claim 6 or claim 7, wherein one of the crossing links is an articulated link comprising a link arm and an articulation member coupled by a rotational connection between the respective pylon and engine connections;
wherein the link arm crosses the other crossing link.

9. The gas turbine engine of claim 8, wherein the articulation link is relatively shorter than the link arm;
wherein the rotational connection between the link arm and articulation member is a spherical connection and/or the pylon connection associated with the articulated link is a spherical connection;
wherein the engine connection associated with the articulated link is a spherical connection.

10. The gas turbine engine of claim 1, wherein the link structure comprises a rigid link body directly coupled to two pylon connections or two engine connections.

11. The gas turbine engine of claim 10, wherein the rigid link body is coupled to one of the pylon connections or to one of the engine connections via an articulation member.

12. The gas turbine engine of claim 10 or 11, wherein the rigid link body extends laterally away from a top-dead-centre axis within the core fairing, for coupling to the rear mount structure via an one of the engine connections.

13. The gas turbine engine of any one of the preceding claims, wherein the link structure comprises an articulated link, the articulated link comprising a link member and an articulation member coupled by a rotational connection between the respective pylon and engine connections.

14. The gas turbine engine of claim 13, wherein the link member is a link arm and the articulation member is relatively shorter than the link arm; and/or
wherein the articulation member extends to the respective pylon connection; or
wherein the articulation member extends to the respective engine connection.

15. The gas turbine engine of any preceding claim,
wherein the rear attachment defines a profile in a reference plane normal to the centreline axis of the engine;
wherein the profile of the rear attachment has a variable angular extent about the centreline axis of the engine, varying over a radial extent of the rear attachment;
wherein the link structure defines a neck in the profile of the rear attachment having a minimum angular extent along the radial extent of the rear attachment; and
wherein a ratio of the engine connection angular extent to the angular extent of the neck is at least 2.
